# EUROPÄISCHE PATENTSCHRIFT

(11) **EP 4 426 579 B1**
(45) Veröffentlichungstag und Bekanntmachung des Hinweises auf die Patenterteilung: **24.09.2025**
(21) Anmeldenummer: 22823403.5
(22) Anmeldetag: 29.11.2022
(51) Int. Cl.: B60K 35/10, B60K 35/21, B60K 35/60, B60K 35/65, G03H 1/00, G03H 1/22

(54) **BEDIEN- ODER SICHTELEMENT MIT SEITLICH AUSGERICHTETER HOLOGRAFISCHER FUNKTIONSANZEIGE ZUR VISUALISIERUNG DER DEM BEDIEN- ODER SICHTELEMENT ZUGEORDNETEN SCHALTFUNKTION UND/ODER DESSEN JEWEILIGEN SCHALTZUSTANDS**
OPERATING OR VISUALISING ELEMENT WITH A LATERALLY ALIGNED HOLOGRAPHIC FUNCTIONAL DISPLAY FOR VISUALISING THE SWITCHING FUNCTION ASSOCIATED WITH THE OPERATING OR VISUALISING ELEMENT AND/OR THE RESPECTIVE SWITCH STATUS OF SAID OPERATING OR VISUALISING ELEMENT
ÉLÉMENT DE MANOEUVRE OU DE VISUALISATION AVEC AFFICHAGE FONCTIONNEL HOLOGRAPHIQUE ALIGNÉ LATÉRALEMENT POUR VISUALISER LA FONCTION DE COMMUTATION ASSOCIÉE À L'ÉLÉMENT DE MANOEUVRE OU DE VISUALISATION ET/OU L'ÉTAT DE COMMUTATION RESPECTIF DUDIT ÉLÉMENT DE MANOEUVRE OU DE VISUALISATION

(30) Priorität: 23.12.2021 DE 102021134491
(43) Veröffentlichungstag der Anmeldung: 11.09.2024
(73) Patentinhaber: Preh GmbH, 97616 Bad Neustadt a.d. Saale (DE)
(72) Erfinder: DÜNNINGER, Johannes, 97723 Oberthulba / OT Wittershausen (DE)
(74) Vertreter: Lohmanns, Bernard
(86) Internationale Anmeldenummer: PCT/EP2022/083701
(87) Internationale Veröffentlichungsnummer: WO 2023/117336

(56) Entgegenhaltungen:
- EP-A1- 3 599 123
- EP-B1- 2 761 417
- DE-A1- 102019 206 196
- DE-A1- 102020 112 777

## Beschreibung

Die Erfindung betrifft ein Bedien- oder Sichtelement mit holografischer Funktionsanzeige. Die Eingabe- oder Sichtteile von Bedien- oder Sichtelementen weisen regelmäßig eine Bedruckung auf, um die mit dem Bedien- oder Sichtelement verbundenen Schaltfunktionalitäten und/oder Schaltzuständen zu visualisieren. Sollen wechselnde Schaltzustände oder Schaltfunktionalitäten visualisiert werden, werden gerne Funktionsanzeigen in Form elektronischer Pixelmatrixanzeigen verwendet. Dazu fehlt es jedoch bei kleineren Bedien- oder Sichtelementen, mit beispielsweise daumengroßer Eingabe- oder Sichtfläche, wie es beispielsweise bei dem Start-Stopp-Knopf eines Kraftfahrzeugs der Fall ist, nicht nur an Bauraum, sondern aufgrund der notwenigen elektrischen Kontaktierung ist die elektronische Pixelmatrixanzeige meist ruhend und damit nicht am betätigten Eingabe- oder Sichtteil befestigt, was dazu führt, dass die Anzeigefläche meist zu tief angeordnet ist, um bei seitlicher Betrachtung noch gut erkennbar zu sein. Darüber hinaus neigen elektronische Pixelmatrixanzeigen bei der Darstellung statischer Anzeigeinhalte oft zu einem "Einbrennen", d.h. der Anzeigeinhalt bleibt auch bei ausgeschalteter Anzeige durch optisch wahrnehmbare Schädigungen der bildgebenden Schichten der Anzeige dauerhaft und unerwünscht sichtbar. Darüber hinaus ist der Stromverbrauch derartiger elektronischer Pixelmatrixanzeigen vergleichsweise hoch. Bei gewissen Anwendungen verbietet sich zudem aufgrund der Verletzungsgefahr beispielsweise bei einem Kopfaufprall die Verwendung üblicher elektronischer Pixelmatrixanzeigen. Die mangelnde Erkennbarkeit der die Schaltzustände oder Schaltfunktionalitäten angebenden Symbole oder Schriftzeichen ist beispielsweise ein Problem bei solchen Bedien- oder Sichtelementen deren Eingabe- oder Sichtflächen nicht in orthogonaler Aufsicht betrachtet werden können, wie es beispielsweise bei dem Start-Stopp-Schalter der Fall ist, der seitlich am Lenkrad angebracht ist oder in der Mittelkonsole. Zwar ist das Problem alternativ dadurch zu lösen, dass für jede Einbausituation ein auf beste Ablesbarkeit getrimmtes Eingabe- oder Sichtteil mit entsprechend ausgerichteter Visualisierung der Schaltzustände bzw. Schaltfunktionalitäten entwickelt wird. Dies ist aber aufwändig und läuft dem allgemeinen, dem Wunsch nach Verringerung der Produktionskosten geschuldeten Trend zuwider, der auf die Reduktion der Typenvielfalt gerichtet ist.

Die EP 3 599 123 A1 offenbart ein Bedien- oder Sichtelement gemäß dem Oberbegriff des Anspruchs 1. Gattungsgemäße Bedien- oder Sichtelemente sind ferner aus der DE 10 2020 112 777 A1, EP 2 761 417 B1 sowie der DE 10 2019 206 196 A1 bekannt.

Vor diesem Hintergrund ist es die Aufgabe der vorliegenden Erfindung, ein Bedien- oder Sichtelement bereitzustellen, welches die Möglichkeit schafft, eine Visualisierung der dem Bedien- oder Sichtelement zugeordneten Schaltfunktion und/oder dessen jeweiligen Schaltzustands vergleichsweise leicht an die Einbausituation und Bediensituation anzupassen, dabei ein geringes Bauvolumen bei vergleichsweise hoher Bildinformationsdichte zur Visualisierung der dem Bedien- oder Sichtelement zugeordneten Schaltfunktion und/oder dessen jeweiligen Schaltzustands zu gewährleisten, wobei insbesondere die Visualisierung weder durch Schmutz noch durch haptische Elemente auf der Eingabe- oder Sichtfläche beeinträchtigt wird. Diese Aufgabe wird durch ein Bedien- oder Sichtelement des Anspruchs 1 gelöst. Eine entsprechende Anordnung bzw. eine Verwendung sind jeweils Gegenstand eines nebengeordneten Anspruchs. Vorteilhafte Ausgestaltungen sind Gegenstand der jeweils abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Bedien- oder Sichtelement mit einem eine zumindest bereichsweise transparente oder zumindest bereichsweise transluzente Eingabe- oder Sichtfläche ausbildenden Eingabe- oder Sichtteil. Es weist ferner einen Träger zur Festlegung des Bedien- oder Sichtelements an einer externen Struktur, insbesondere einer Kraftfahrzeugkomponente, wie einem Armaturenbrett, einer Mittelkonsole, einem Lenkrad oder Dergleichen auf.

Optional, je nach Auslegung als reines Sichtelement oder als Bedienelement, ist eine Detektionseinrichtung vorgesehen, die ausgebildet ist, eine Betätigung und/oder eine Berührung der Eingabe- oder Sichtfläche durch einen Bediener zu detektieren. Als Betätigung wird eine über eine Berührung der Eingabe- oder Sichtfläche hinausgehende, einer bei der Betätigung auf die Eingabe- oder Sichtfläche einwirkenden Betätigungskraft folgende Verlagerung der Eingabe- oder Sichtfläche verstanden. Dementsprechend wird bei einer Berührung beispielsweise das Maß der Annäherung an die Eingabe- oder Sichtfläche maßgebend für die positive Feststellung einer Berührung sein, während bei der Betätigung die gemessene Verlagerung oder die gemessene Betätigungskraft beispielsweise die maßgeblichen Größen für die positive Feststellung einer Betätigung sind.

Erfindungsgemäß ist ein aus Sicht des Bedieners unterhalb der Eingabe- oder Sichtfläche angeordneter, am Träger festgelegter, transparenter Lichtleiter vorgesehen, der eine der Eingabe- oder Sichtfläche zugewandte, obere Grenzfläche und eine der Eingabe- oder Sichtfläche abgewandte untere Grenzfläche aufweist. Der Lichtleiter ist beispielsweise aus einem transparenten Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) ausgebildet. Beispielsweise ist der Lichtleiter in einem thermisch formgebenden Verfahren, beispielsweise als Spritzgussformling oder durch thermische Extrusion, beispielsweise als Folie, hergestellt. Bevorzugt sind die obere Grenzfläche und die untere Grenzfläche zumindest bereichsweise oder vollständig parallel zueinander ausgerichtet.

Erfindungsgemäß ist mindestens eine Lichtquelle vorgesehen, die so ausgerichtet ist, dass ein optisches Wiedergabewellenfeld über eine Lichteintrittsfläche in den Lichtleiter eingekoppelt wird.

Erfindungsgemäß ist ein ein Hologramm beinhaltender, holografischer Bildträger vorgesehen, der angrenzend an die obere, der Eingabe- oder Sichtfläche zugewandte Grenzfläche des Lichtleiters oder an die untere, der Eingabe- oder Sichtfläche abgewandte Grenzfläche des Lichtleiters angeordnet ist. Das in den Lichtleiter eingekoppelte, von der Lichtquelle erzeugte Wiedergabewellenfeld gelangt von der Lichteintrittsfläche aufgrund einer durch innere Reflexion, wie mehrere Reflexionen, bevorzugt Totalreflexionen, im Lichtleiter bewirkten Lichtausbreitung, beispielsweise an oberer und/oder unterer Grenzfläche, bis in den holografischen Bildträger, wird dort bevorzugt durch Phasen- und/oder Amplitudeninterferenz aus dem Wiedergabewellenfeld in ein das Hologramm als Bildinformation beinhaltendes Bildwellenfeld transformiert, welches aus dem holografischen Bildträger in Richtung des Bedieners ausgekoppelt wird, um dem Bediener das im holografischen Bildträger gespeicherte Hologramm als virtuelles Bild anzuzeigen.

Dabei beinhaltet das Hologramm wenigstens ein Zeichen, wie ein Symbol und/oder wenigstens ein Schriftzeichen, das jeweils in einer ersten Darstellungsfläche liegt. Das Zeichen, wie das Symbol oder die Schriftzeichen, dient der Visualisierung der dem Bedien- oder Sichtelement zugeordneten Schaltfunktionalität und/oder eines akuten Schaltzustands

Hinsichtlich des holografischen Bildträgers und hinsichtlich des Hologramms ist die Erfindung abgesehen von der Ausrichtung der ersten Darstellungsfläche und optionalen zweiten Darstellungsfläche des holografischen Bildes nicht eingeschränkt. Prinzipiell ist jegliche mit dem Wiedergabewellenfeld interferierende Schicht gemeint, die in der Lage ist, durch örtlich selektive Beugungsinterferenz des Wiedergabewellenfelds dem reflektierten Bildwellenfeld die in der Schicht enthaltende Bildinformation durch Phasenmodulation und/oder Amplitudenmodulation aufzuprägen. Der Begriff optisches Wiedergabewellenfeld soll ausdrücken, dass das zu verwendende Licht, in für die Wiedergabe des Hologramms geeigneter Weise beispielsweise hinsichtlich spektraler Zusammensetzung, Kohärenz und hinsichtlich Einfallswinkel auf den jeweiligen holografischen Bildträger einzustellen ist, da es eine dem holografischen Bildträger immanente Voraussetzung für die Sichtbarmachung des von ihm beinhaltenden Hologramms und dessen optische Qualität ist. Es obliegt daher dem Fachmann die hier notwendigen Maßnahmen zu ergreifen.

Allgemein lassen sich Hologramme nach den Eigenschaften des holografischen Speichers in Volumen- und Flächenhologramme sowie in Amplituden- und Phasenhologramme einteilen. Abhängig von den auftretenden Farben bei der Rekonstruktion des Hologramms unterscheidet man Weißlichthologramme und Hologramme, die nicht unter weißem Licht rekonstruiert werden können, sowie echtfarbige Hologramme.

Volumenhologramme befinden sich auf einer Filmschicht des holografischen Bildträgers, deren Dicke ebenfalls zur Speicherung von holografischen Bildinformationen genutzt wird. Volumenhologramme können Weißlichthologramme sein, denn wegen der Bragg-Bedingung findet in diesem Fall eine für die Wellenlängen des Lichts selektive Interferenz statt. Nur wenn die Bragg-Gleichung n·λ=2d·sin(α) erfüllt ist, kann das im Winkel α einfallende Wiedergabewellenfeld mit der Wellenlänge λ an der Filmschicht mit dem Netzebenenabstand d reflektiert werden. Bei Weißlichtreflexionshologrammen hängt deshalb die Farbe des Hologramms vom Einfallswinkel des Lichts auf den Film ab.

Amplitudenhologramme befinden sich auf Filmschichten, die unterschiedliche Schwärzungen besitzen. Dadurch wird die Helligkeit des durchgelassenen Lichtes so verändert, dass durch die Überlagerung der Lichtwellen mit unterschiedlicher Amplitude und Phasen ein Bild entsteht. Die Filmschichten der Phasenhologramme besitzen dagegen überall die gleiche Transparenz. Das Interferenzmuster, das die holografischen Bilder erzeugt, kommt dann nur durch die unterschiedlichen Phasen der elektromagnetischen Wellen zustande. Phasenhologramme können daher durch Oberflächenreliefs gebildet werden, d. h. aus einem Muster aus Vertiefungen und Erhebungen. Dann legen die Lichtstrahlen unterschiedliche Wege in dem Filmmaterial, das meist aus Kunststofffolie besteht, zurück. Das Licht besitzt in dem Film eine geringere Ausbreitungsgeschwindigkeit als an der Luft, deshalb führen verschiedene im Film zurückgelegte Lichtwege zu Phasendifferenzen. Darauf beruht die Interferenz bei Phasenhologrammen. Phasenhologramme sind oft Prägehologramme, bei denen die Vertiefungen mit einem Stempel in das Material gedrückt werden; es können aber auch bei speziellen Filmen Vertiefungen durch unterschiedliche Belichtung entstehen. Neben der Möglichkeit einer Phasenmodulation durch Oberflächenreliefs kann ein Phasenhologramm durch eine örtliche Modulation des Brechungsindexes wie z. B. in Silberhalogenidfilmen erzeugt werden, um hier eine nicht abschließende Anzahl von möglichen, erfindungsgemäßen Ausführungsformen betreffend den holografischen Bildträger dem Fachmann an die Hand zu geben.

Erfindungsgemäß erstreckt sich die durch das wenigstens eine Zeichen, wie das Symbol bzw. das wenigstens eine Schriftzeichen, definierte, erste Darstellungsfläche, die bei ebener Ausgestaltung auch als erste Darstellungsebene bezeichnet wird, weder parallel zur oberen Grenzfläche noch parallel zur unteren Grenzfläche des Lichtleiters. Die erste Darstellungsfläche ist beispielsweise diejenige zweidimensionale Fläche die den Informationsgehalt des Zeichens wiedergibt und wird beispielsweise durch die Verlaufsrichtung eines Schriftzuges sowie diejenige Richtung, die der Bestimmung der Schriftgröße dient, aufgespannt. Beispielsweise ist eine Orthogonale durch den geometrischen Mittelpunkt des in der ersten Darstellungsfläche liegenden Zeichens in Richtung des Bedieners ausgerichtet, während dessen Blick schräg, also in einem Winkel weniger 90°, auf die beiden Grenzflächen des Lichtleiters fällt.

Bevorzugt ist die erste Darstellungsfläche so gewählt, dass diese aus Sicht des Bedieners bzw. Betrachters über der oberen Grenzfläche des Lichtleiters, bevorzugt über der Eingabe- oder Sichtfläche, liegt.

In einer bevorzugten Ausführungsform beinhaltet das Hologramm wenigstens ein in einer zweiten Darstellungsfläche liegendes weiteres Zeichen. Dabei erstreckt sich die zweite Darstellungsfläche, die bei ebener Ausgestaltung auch als zweite Darstellungsebene bezeichnet wird, ebenfalls weder parallel zur oberen Grenzfläche noch parallel zur unteren Grenzfläche des Lichtleiters. Beispielsweise beinhaltet das weitere Zeichen ein weiteres Symbol und/oder mindestens ein zweites Schriftzeichen. Das weitere Zeichen kann auch keinen Informationsgehalt aufweisen und beispielsweise eine Fläche sein. Bevorzugt beinhaltet das weitere Zeichen eine Negativdarstellung des in der ersten Darstellungsfläche dargestellten Schriftzeichens bzw. Symbols, insbesondere Schriftzuges.

Beispielsweise ist eine Orthogonale durch den geometrischen Mittelpunkt des weiteren Zeichens in der zweiten Darstellungsfläche in Richtung des Bedieners ausgerichtet, während dessen Blick schräg, also in einem Winkel von weniger 90°, auf die beiden Grenzflächen des Lichtleiters fällt.

Bevorzugt ist die zweite Darstellungsfläche so gewählt, dass diese aus Sicht des Betrachters unter der Eingabe- oder Sichtfläche, bevorzugter unter der unteren Grenzfläche des Lichtleiters, beispielsweise unter dem holografischen Bildträger zu liegen scheint. Durch die Darstellung in zwei Ebenen kann selbst bei sehr kleinen Abmessungen des Hologramms ein dreidimensionaler Tiefeneffekt verstärkt werden, während die (seitliche) Ablesbarkeit gewährleistet bleibt.

Die erste und zweite Darstellungsfläche sind beispielsweise parallel zueinander ausgerichtet. Bevorzugt sind die erste und zweite Darstellungsfläche über ihren gesamten Verlauf nicht parallel zueinander, dem ein lediglich abschnittsweise paralleler Verlauf somit nicht entgegensteht.

In einer Ausgestaltung entspricht das weitere Zeichen der zweiten Darstellungsfläche dem in der ersten Darstellungsfläche liegenden Zeichen, wie Symbol oder Schriftzeichen im angezeigten Inhalt. Beispielsweise unterscheiden sie sich dabei in Größe und/oder Winkelausrichtung und/oder Helligkeit der Darstellung. Bevorzugt weist das in der zweiten Darstellungsfläche liegende weitere Zeichen eine Negativ-Darstellung des jeweils in der ersten Darstellungsfläche liegenden Zeichens auf.

Durch die erfindungsgemäße Lösung lässt sich somit nicht nur bauraumsparend ein Bedien- oder Sichtelement mit zugehöriger Funktionsanzeige realisieren, welche durch Aktivieren einer Lichtquelle selektiv zumindest ein Symbol oder Schriftzeichen zur Anzeige bringt, sondern auch eine auf die Bedien- und/oder Einbausituation abgestimmte Ausrichtung des Zeichens, wie Symbols oder Schriftzeichens, erreichen, welche nicht mit der Ausrichtung des Lichtleiters bzw. seiner Grenzflächen übereinstimmt.

Dadurch dass somit die holografische Darstellung perspektivisch betrachtet eine Aufsicht auf das Zeichen aus einer Betrachtungsposition ermöglicht, die nicht der Aufsicht auf die Grenzflächen des Lichtleiters und damit meist auch nicht der Aufsicht auf die Eingabe- oder Sichtfläche entspricht, sind nicht nur vielfältige Einbausituationen möglich, ohne die Erkennbarkeit oder Lesbarkeit des Symbols oder Schriftzeichens zu beeinträchtigen, sondern ist somit auch das Bedien- oder Sichtelement leicht lediglich durch Wechsel des holografischen Bildträgers an diverse Einbau- bzw. Bediensituationen anpassbar. Beispielsweise kann so leicht ein Bedien- oder Sichtelement von einer Fahrerbediensituation mit spezifischem Betrachtungswinkel auf den Lichtleiter bzw. die Eingabe- oder Sichtfläche auf eine Beifahrerbediensituation durch alleinigen Wechsel des holografischen Bildträgers umgestellt werden. Beispielsweise kann ein Bedien- oder Sichtelement, welches für die Einbausituation in einem Rechtslenker-Fahrzeug vorgesehen ist, durch alleinigen Wechsel des holografischen Bildträgers in eine für den Einbau in einem Linkslenker-Fahrzeug bestimmte Ausgestaltung umgestellt werden. Durch die "optische Separierung" von Lichtleiter und Eingabe- oder Sichtfläche ist zudem sichergestellt, dass das optische System zur Erzeugung des virtuellen Bilds nicht durch Schmutz und oder haptische Elemente auf der Eingabe- oder Sichtfläche beeinträchtigt wird. Dabei ist die komplette Bildinformation in den holografischen Bildträger integrierbar, und bleibt auch bei Fremdlichteinfall durch die transparente Eingabe- oder Sichtfläche für den Bediener zuverlässig unsichtbar, so dass Fehlinformationen weitgehend vermieden werden können.

Es wird zudem eine bessere Sichtbarkeit/Ablesbarkeit für die "Zielperson" des Zeichens erreicht, da gemäß einer bevorzugten Ausgestaltung die Mittelachse des Sichtbarkeitskegels in Richtung der Position des seitlichen Betrachters also damit bezogen auf die obere und untere Grenzfläche geneigt ist, bevorzugter genau auf die Position des seitlichen Betrachters ausgerichtet ist. Der Sichtbarkeitskegel ist derjenige Raumwinkelbereich innerhalb dessen ein Betrachter das Zeichen, insbesondere dessen Außenumfang vollständig zu erkennen vermag. Beispielsweise ist der Sichtbarkeitskegel derjenige Raumwinkelbereich zwischen den geometrischen Randstrahlen, die vom äußeren Rand des holografischen Bildträgers ausgehen und das in der jeweiligen Darstellungsfläche angezeigte Zeichen tangential einfassen. Dem Fachmann ist klar, dass der Sichtbarkeitskegel nicht zwingend kegelförmig, sondern sein Querschnitt durch die Form des dargestellten Zeichens bestimmt ist. Ein geneigter Sichtbarkeitskegel ergibt sich beispielsweise durch die geneigte Ausrichtung der Mittelachse dieses Raumwinkelbereichs, wobei diese Mittelachse dem geometrischen Strahlengang durch den geometrischen Mittelpunkt des in der jeweiligen Darstellungsfläche liegenden Zeichens entspricht. Bevorzugt schließt die Mittelachse mit der oberen und/oder unteren Grenzfläche des Lichtleiters einen Winkel von weniger als 30° ein. Zur besseren Erkennbarkeit des Zeichens ist ferner vorgesehen, dass dabei die Mittelachse des Sichtbarkeitskegels die zugehörige Darstellungsfläche orthogonal schneidet.

Gemäß einer bevorzugten Ausgestaltung ist zumindest im Bereich unterhalb der Eingabe- oder Sichtfläche zwischen dem Lichtleiter und dem Eingabe- oder Sichtteil ein Luftspalt vorgesehen. Gemäß einer bevorzugten Ausgestaltung ist das Eingabe- oder Sichtteil unter Einwirkung einer Betätigungskraft auf die Eingabe- oder Sichtfläche in Richtung des Lichtleiters elastisch verformbar ausgestaltet oder gegenüber dem Träger in Richtung des Lichtleiters elastisch rückstellend verlagerbar gelagert, um eine detektierbare Betätigung der Eingabe- oder Sichtfläche zu ermöglichen. Die Visualisierung mit dem ein Hologramm beinhaltenden, holografischen Bildträger hat den Vorteil, dass der für die Betätigung notwenige Luftspalt die holografische Bildgebung nicht oder zumindest allenfalls unwesentlich beeinträchtigt. Beispielsweise ist das Eingabe- oder Sichtteil zumindest in dem die Eingabe- oder Sichtfläche umgebenden Bereich aus einem elastisch nachgebenden Material, wie einem Thermoplast oder einem Elastomer ausgebildet. Eine rückstellende Verlagerung ergibt sich in einer Ausgestaltung durch eine federvorgespannte translatorische Lagerung des Eingabe- oder Sichtteils am Träger.

Bevorzugt lässt sich das Eingabe- oder Sichtteil unabhängig vom Lichtleiter verformen und/oder verlagern, beispielsweise indem das Eingabe- oder Sichtteil nur am Träger befestigt oder gelagert ist. Somit wird das optische System bei einer Betätigung nicht beeinträchtigt.

Bevorzugt befindet sich zwischen Eingabe- oder Sichtteil und Träger ein Betätigungssensor, beispielsweise ein Kraftsensor oder ein mechanischer Schalter. Dieser ist bevorzugt so angeordnet, dass der bei einer Betätigung ausgeübte Kraftfluss von der Eingabe- oder Sichtfläche zum Kraftsensor nicht über den Lichtleiter geht.

In einer bevorzugten Ausgestaltung des Bedien- oder Sichtelements ist ein optisches Element, wie ein Spiegel oder eine Linse zur Erzeugung eines kollimierten Wiedergabewellenfeldes vorgesehen, beispielsweise ist die Lichteintrittsfläche als optisches Element ausgebildet. Bevorzugter sind ein oder mehrere optische Elemente zwischen der Lichteintrittsfläche des Lichtleiters und der Lichtquelle angeordnet, um die Darstellungsqualität des ersten Reflexionshologramms zu verbessern.

Bevorzugt ist der holografische Bildträger als Folienschichtaufbau ausgebildet und weist beispielsweise neben der das Hologramm beinhaltenden Filmschicht, die beispielsweise eine Fotopolymerschicht ist, mindestens eine Klebstoffschicht sowie eine Substratschicht aus, die beispielsweise eine Thermoplastfolie, wie eine PC-, PET oder TAC-Folie ist. Beispielsweise liegt die Dicke der Fotopolymerschicht im Bereich von 1 µm bis 70 µm. Die holgrafische Bildinformation ist beispielsweise durch Prägen in diese eingebracht.

Bevorzugt beträgt eine Maximalabmessung des holografischen Bildträgers weniger als 30 mm, bevorzugt weniger als 20 mm.

Bevorzugt sind der holografische Bildträger und der Lichtleiter stoffschlüssig verbunden. Beispielsweise wird die stoffschlüssige Verbindung dadurch erreicht, dass eine Klebstoffschicht zwischen dem holografischen Bildträger und dem Lichtleiter vorgesehen ist. Bevorzugt wird die stoffschlüssige Verbindung durch Hinterspritzen oder Laminieren des holografischen Bildträgers mit einem den Lichtleiter ausbildenden, transparenten Thermoplast in einem thermisch formgebenden Verfahrensschritt bewirkt.

Bevorzugt sind die erste Darstellungsfläche und die obere Grenzfläche und die untere Grenzfläche eben, wobei die erste Darstellungsfläche geneigt zur oberen Grenzfläche und geneigt zur unteren Grenzfläche ist. Bevorzugter ist dabei die zweite Darstellungsfläche ebenfalls geneigt zur oberen Grenzfläche und geneigt zur unteren Grenzfläche.

Bevorzugt ist das Hologramm des holografischen Bildträgers ein Transmissionshologramm und der holografische Bildträger angrenzend an die obere Grenzfläche angeordnet. Bei einem Transmissionshologramm erfolgen Beleuchtung von unterschiedlichen Halbräumen, wobei der Bildträger durchleuchtet wird.

Gemäß einer bevorzugten Ausgestaltung ist das Hologramm des holografischen Bildträgers ein Reflexionshologramm, wobei der holografische Bildträger angrenzend an die untere Grenzfläche angeordnet ist. Bei Reflexionshologrammen erfolgt die Beleuchtung von der gleichen Seite wie die Betrachtung. Reflexionshologramme haben den Vorteil, dass sie im Allgemeinen stärker wellenlängenselektiv arbeiten als Transmissionshologramme, d.h. nur Licht eines engen Wellenlängenbereichs wird als Leuchtsignatur abgebildet. Dies führt dazu, dass auch bei Verwendung einer relativ breitbandigen Lichtquelle wie einer roten Leuchtdiode die erzeugte Leuchtsignatur immer im Wesentlichen mit der gleichen Wellenlänge erscheint. Dies ist deswegen wünschenswert, da aufgrund von geringen Abweichungen der spektralen Empfindlichkeit roter und grüner Farbrezeptoren im Auge selbst kleine Wellenlängenänderungen zwischen ca. 550 nm und 640 nm zu einer deutlichen räumlichen Verschiebung der wahrgenommenen Farbe führen, was die Bildsignatur, d.h. das Hologramm, beeinträchtigt.

Zudem kann bei Transmissionshologrammen, insbesondere Transmissionsvolumenhologrammen, das Problem der sogenannten Übermodulation auftreten, was im Wesentlichen bedeutet, dass eine optimale Schichtdicke des Transmissionshologramms bei gegebener Geometrie und gegebener Brechzahlmodulation durch das Hologramm von der Wellenlänge abhängt, was zu Farbverschiebungen führen kann.

Bevorzugt ist der Lichtleiter im Wesentlichen flächig ausgebildet, wobei die obere Grenzfläche und die untere Grenzfläche jeweils eine Hauptfläche ausbilden und eine die Hauptflächen verbindende Stirnfläche die Lichteintrittsfläche des Lichtleiters ausbildet. Als Hauptflächen werden die flächenmäßig größten Flächen des Lichtleiters verstanden. Die Hauptflächen sind bevorzugt eben und parallel zueinander ausgerichtet.

Bevorzugt ist eine Hauptausbreitungsrichtung der Lichtquelle geneigt zur oberen Grenzfläche ausgerichtet, um Bauraum zu sparen.

Bevorzugt ist die Lichteintrittsfläche vom Bediener aus gesehen bezüglich des ersten holografischen Bildträgers seitlich und/oder nach hinten versetzt angeordnet.

Zur Verbesserung der Übertragung des Wiedergabewellenfeldes weist der Lichtleiter beispielsweise entlang seines Verlaufs eine Querschnittsaufweitung auf, insbesondere sind dort Querschnittsaufweitung vorgesehen, wo ein Richtungswechsel in der Lichtausbreitung erforderlich ist.

Beispielsweise weist der Lichtleiter einen die Lichteintrittsfläche aufweisenden, ersten Lichtleiterabschnitt und einen die obere Grenzfläche und untere Grenzfläche aufweisenden, zweiten Lichtleiterabschnitt auf, die in einem Übergangsabschnitt ineinander übergehen, und wobei der erste Lichtleiterabschnitt, der zweite Lichtleiterabschnitt und der Übergangsabschnitt so ausgebildet sind, dass die Lichteintrittsfläche aus Sicht des Betrachters nach hinten versetzt zur unteren Grenzfläche angeordnet ist. Beispielsweise ist ein zur oberen Grenzfläche orthogonaler und zur Lichteintrittsfläche orthogonaler Querschnitt des Lichtleiters im Wesentlichen L-förmig, wobei der erste Lichtleiterabschnitt und der zweite Lichtleiterabschnitt jeweils einen Schenkel des "L" ausbilden. Bevorzugt bildet der Übergangsabschnitt die zuvor erwähnte Querschnittsaufweitung aus.

Bevorzugt weist der Übergangsabschnitt wenigstens eine zu der oberen Grenzfläche geneigte Reflexionsfläche auf, um das optische Wiedergabewellenfeld aus dem ersten Lichtleiterabschnitt durch innere Reflexion an der Reflexionsfläche in den zweiten Lichtleiterabschnitt zu reflektieren.

Bevorzugt ist das Eingabe- oder Sichtteil mit dem Träger und/oder dem Lichtleiter stoffschlüssig, beispielsweise durch Ultraschallverschweißen, verbunden. Durch die Verschweißung mittels Ultraschall lässt sich ein zwischen Eingabe- oder Sichtteil und Lichtleiter vorhandenes lichtes Maß, beispielweise ein Luftspalt, mit geringem Maß und präziser Ausrichtung herstellen. Bevorzugt ist das lichte Maß zwischen Lichtleiter und Eingabe- oder Sichtteil kleiner als 1mm, bevorzugt kleiner als 0,5mm.

Aufgrund der sehr stabilen und dauerhaften Befestigung in dieser Ausführungsform ist es möglich, dass der Lichtleiter bei einer Betätigung mitsamt dem Eingabe- oder Sichtteil mechanisch verlagert wird. Bevorzugt ist die Lichtquelle in diesem Fall ebenfalls am Eingabe- oder Sichtteil befestigt, welches seinerseits am Träger gelagert ist.

Bevorzugt weist das Bedien- oder Sichtelement eine transparente Elektrode oder ein transparentes Elektrodenarray auf, die jeweils an dem Eingabe- oder Sichtteil im Bereich der Eingabe- oder Sichtfläche festgelegt sind. Das Bedien- oder Sichtelement weist ferner eine mit der Elektrode oder den Elektroden des Elektrodenarray elektrisch leitend verbundene Auswerteinheit zur kapazitiven, bevorzugt ortsaufgelösten, Berührdetektion auf. Zur Betätigungsdetektion kann ein elektromechanisches Schaltelement oder ein Kraftsensor, wie ein kapazitiver Kraftsensor, vorgesehen sein, die beispielsweise jeweils zwischen dem Träger und dem Eingabe- oder Sichtteil angeordnet sind.

Beispielsweise ist ferner ein Aktuator zur Erzeugung eines aktiven haptischen Feedbacks vorgesehen, um den Bediener eine Eingabebestätigung haptisch zu vermitteln. Beispielsweise ist ein ausschließlich am Eingabe- oder Sichtteil festgelegter oder zwischen dem Eingabe- oder Sichtteil und dem Träger wirkender Schwingungs- oder Kraftanreger vorgesehen, beispielsweise ein elektrodynamischer, elektromagnetischer oder piezoelektrischer Aktuator, der bei positiver Feststellung einer Berührung durch die Detektionseinrichtung, wie beispielsweise bei Überschreiten einer vorgegebenen Berührdauer, oder bei positiver Detektion einer Betätigung durch die Detektionseinrichtung, wie bei Überschreiten einer vorgegebenen Betätigungskraft, ein aktives haptisches Feedback durch eine Schwingungsanregung, Stoßanregung des Eingabe- oder Sichtteils bewirkt. Dabei sind beispielsweise der Schwingungs- oder Kraftanreger, der Träger und das Eingabe- oder Sichtteil so angeordnet, dass sich die haptische Anregung des Aktuators hauptsächlich auf die Blende überträgt und nicht auf das optische System. Beispielsweise ist zwischen Träger und Eingabe- oder Sichtteil und/oder zwischen Träger und Lichtleiter und/oder zwischen Eingabe- oder Sichtteil und Lichtleiter ein elastisches Element und/oder ein Dämpfungselement angeordnet, so dass sich die Schwingungs- oder Kraftanregung nur vermindert auf den Lichtleiter überträgt. Beispielsweise besteht das elastische Element und/oder das Dämpfungselement aus einer in einem Spritzgussverfahren hergestellten Weichkomponente, welche an den Träger und/oder das Eingabe- oder Sichtteil und/oder den Lichtleiter angeformt wird. Beispielsweise besteht die Weichkomponenten aus einem thermoplastischen Elastomer.

Bevorzugt weist die Eingabe- oder Sichtfläche wenigstens eine Vertiefung oder Erhebung zur haptischen Orientierung, auch als Fühlhilfe bezeichnet, auf.

Die Erfindung betrifft eine Anordnung aus mehreren der zuvor beschriebenen Bedien- oder Sichtelementen. Bevorzugt sind deren Eingabe- oder Sichtteile unter Ausbildung einer gemeinsamen Sichtfläche, welche die jeweiligen Eingabe- oder Sichtflächen beinhaltet, einstückig ausgebildet,

Die Erfindung betrifft ferner die Verwendung des Bedien- oder Sichtelements in einer der zuvor beschriebenen Ausführungsformen in einem Kraftfahrzeug.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Figur 1: eine schematische Aufsicht einer erfindungsgemäßen Anordnung, welche mehrere erfindungsgemäße Bedien- oder Sichtelemente 1 in einer bevorzugten Ausführungsform beinhaltet;
- Figur 2: eine schematische Schnittansicht eines erfindungsgemäßen Bedien- oder Sichtelements 1, welches Teil der in Figur 1 gezeigten Anordnung 10 ist.

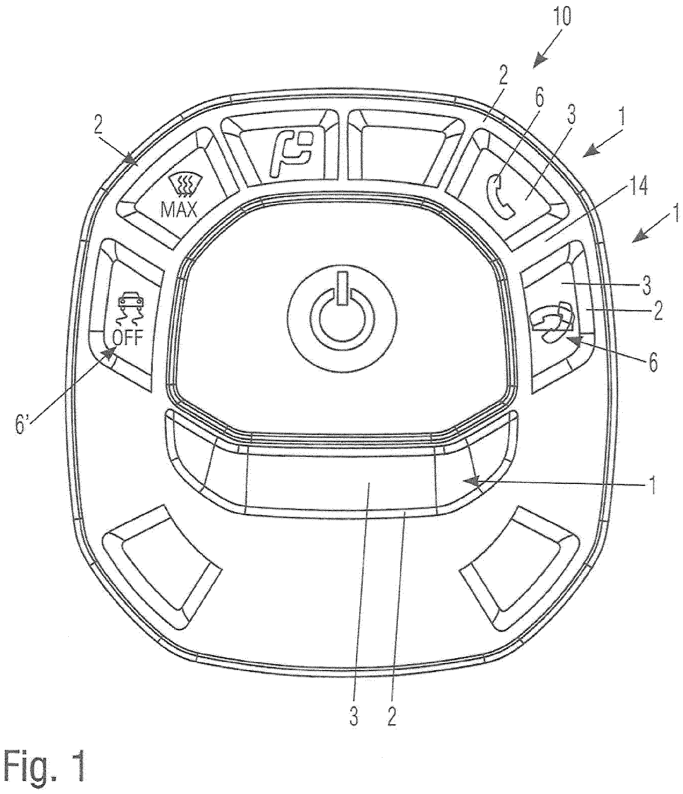

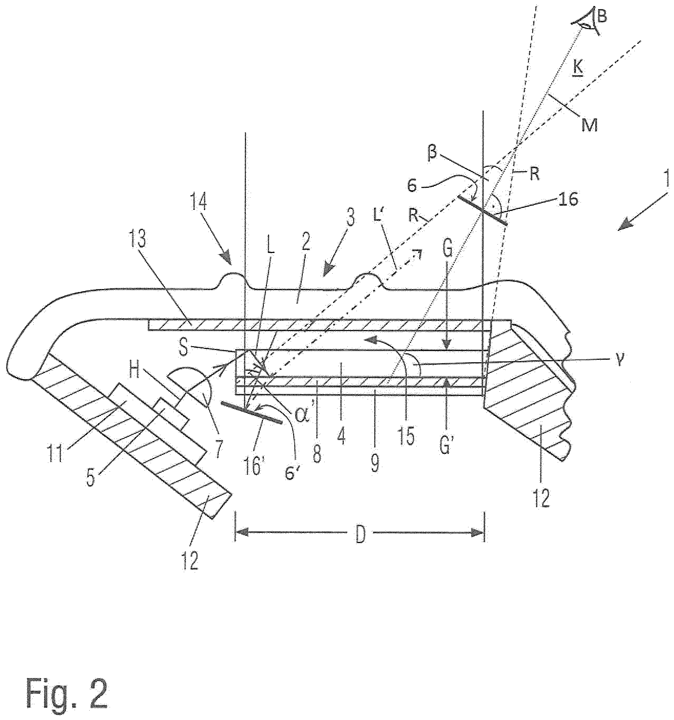

Figur 1 zeigt eine Aufsicht auf eine Ausführungsform einer erfindungsgemäßen Anordnung 10, welche mehrere erfindungsgemäße Bedien- oder Sichtelemente 1 in einer ersten Ausführungsform beinhaltet. Figur 2 ist eine zugehörige Schnittansicht. Die Anordnung 10 umfasst mehrere erfindungsgemäße Bedien- oder Sichtelemente 1, die jeweils ein Eingabe- oder Sichtteil 2 aus einem Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) aufweisen. Die Eingabe- oder Sichtteile 2 aller zur Anordnung 10 gehörigen Bedien- oder Sichtelemente 1 sind dabei einstückig ausgebildet und bilden eine geschlossene zusammenhängende, dem Bediener zugewandte Sichtfläche aus, in die jeweils eine Eingabe- oder Sichtfläche 3 eingebettet ist. Jedes Bedien- oder Sichtelement 1 weist eine zumindest bereichsweise transparente oder zumindest bereichsweise transluzente Eingabe- oder Sichtfläche 3 auf, die gleichzeitig eine Anzeigefläche für das sichtbare, holografisch wiedergegebene Zeichen 6 oder das weitere Zeichen 6' ist, welches wie nachfolgend beschrieben bei Aktivierung einer dem Bedien- oder Sichtelement 1 jeweils zugeordneten Lichtquelle für den Bediener sichtbar wird. In Figur 1 ist jeweils die Eingabe- oder Sichtfläche 3 in Aufsicht zu sehen, während das Zeichen 6 und das weitere Zeichen 6' leicht perspektivisch verzerrt sind, da die Aufsicht erst aus einer seitlich versetzten Betrachtung auf deren holografische erste Darstellungsfläche bzw. erste Darstellungsebene erfolgt. Bevorzugt sind wenigstens zwei der Eingabe- oder Sichtflächen 3 nicht koplanar angeordnet. Die Eingabe- oder Sichtflächen 3 weisen in der jeweiligen Eingabe- oder Sichtfläche 3 angeordnete oder die jeweilige Eingabe- oder Sichtfläche 3 umgebende Erhebungen 14 als haptische Orientierungshilfen auf.

Anhand der Figur 2 wird der Aufbau einer ersten Ausführungsform der erfindungsgemäßen Bedien- oder Sichtelemente 1 erläutert. Jedes der Bedien- oder Sichtelemente 1 der Anordnung weist ein eine zumindest bereichsweise transluzente oder transparente Eingabe- oder Sichtfläche 3 ausbildendes Eingabe- oder Sichtteil 1 auf. Es weist ferner jeweils einen Träger 12 zur Festlegung des Bedien- oder Sichtelements 1 an einer externen, nicht dargestellten Struktur, insbesondere einer Kraftfahrzeugkomponente, wie einem Armaturenbrett, einer Mittelkonsole, einem Lenkrad oder Dergleichen auf. So wie die Eingabe- oder Sichtteile 2 ist der Träger 12 aller zur Anordnung 10 gehörigen Bedien- oder Sichtelemente 1 einstückig ausgebildet. Bei Auslegung als Bedienelement, wie hier gezeigt, ist ferner eine Detektionseinrichtung 13 vorgesehen, welche ausgebildet ist, eine durch den Bediener B erfolgende Berührung der Eingabe- oder Sichtfläche 3 zu detektieren. Bei einer Auslegung als reines Sichtteil ist die Detektionseinrichtung entbehrlich. Die bei der gezeigten Ausführungsform verwendete Detektionseinrichtung 13 weist eine oder mehrere transparente Elektroden auf, die auf der dem Bediener B abgewandten Seite des Eingabe- oder Sichtteils 2 unter der Eingabe- oder Sichtfläche 3 am Eingabe- oder Sichtteil 2 festgelegt sind, um mittels einer nicht dargestellten Auswerteinheit eine kapazitive Annäherungsdetektion durchzuführen, um somit kapazitiv das Maß einer Annäherung an die Eingabe- oder Sichtfläche 3 zu detektieren und positiv dann eine Berührung der entsprechenden Eingabe- oder Sichtfläche 3 festzustellen, wenn eine vorgegebenes Annäherungsmaß überschritten ist.

Wie aus Figur 2 zu erkennen, ist bei jedem Bedien- oder Sichtelement 1 ein aus Sicht des Bedieners B unterhalb der Eingabe- oder Sichtfläche 3 angeordneter, am Träger 12 festgelegter, transparenter Lichtleiter 4 vorgesehen, der eine der Eingabe- oder Sichtfläche 3 bzw. dem Bediener B zugewandte, obere Grenzfläche G und eine der Eingabe- oder Sichtfläche 3 bzw. dem Bediener B abgewandte untere Grenzfläche G' aufweist. Zwischen der oberen Grenzfläche G und dem mit der Eingabe- oder Sichtfläche 3 versehenen Bereich des Eingabe- oder Sichtteils 2 ist jeweils ein Luftspalt 15 vorgesehen, um die für die Eingabe notwendige Nachgiebigkeit des Eingabe- oder Sichtteils 2 zu ermöglichen.

Der Lichtleiter 4 ist beispielsweise aus einem transparenten Thermoplast, wie Polyethylen (PE), Polycarbonat (PC), Polystyrol (PS), Polyvinylchlorid (PVC), Polyamide (PA), Acrylnitril-Butadien-Styrol (ABS) oder Polymethylmethacrylat (PMMA) ausgebildet. Beispielsweise ist der Lichtleiter 4 in einem thermisch formgebenden Verfahren, beispielsweise als Spritzgussformling oder durch thermische Extrusion, beispielsweise als Folie, hergestellt. Die Eingabe- oder Sichtfläche 3 erstreckt sich im Wesentlichen parallel zu oberen Grenzfläche G und unteren Grenzfläche G'. Bei den in Figur 2 gezeigten, ersten Ausführungsformen der Bedien- oder Sichtelemente 1 ist der Lichtleiter 4 im Wesentlichen flächig ausgebildet, wobei die obere Grenzfläche G und die untere Grenzfläche G' jeweils eine Hauptfläche des Lichtleiters 4 ausbilden und eine die Hauptflächen verbindende Stirnfläche eine Lichteintrittsfläche S des Lichtleiters 4 ausbildet. Als Hauptflächen werden die flächenmäßig größten Flächen des Lichtleiters 4 verstanden. Die Hauptflächen, also die obere Grenzfläche G und die untere Grenzfläche G' sind eben und parallel zueinander ausgerichtet.

Die Bedien- oder Sichtelemente 1 weisen jeweils eine Lichtquelle 5, hier in Form einer in SMD-Bauweise ausgelegten Leuchtdiode, die mit einer am Träger 12 festgelegten Leiterplatte 11 verlötet ist, auf. Die Lichtquelle 5 ist mit ihrer Hauptabstrahlrichtung H so auf die Lichteintrittsfläche S gerichtet, dass die Hauptabstrahlrichtung H geneigt zur oberen Grenzfläche G ist und dabei ein optisches Wiedergabewellenfeld L über die Lichteintrittsfläche S in den Lichtleiter 4 eingekoppelt wird. Zur Erzeugung eines kollimiertes Licht beinhaltenden Wiedergabewellenfelds L ist ein optisches Element 7, welches hier nur symbolisch in Form einer halbkonvexen Linse dargestellt ist, jeweils zwischen der Lichteintrittsfläche S des Lichtleiters 4 und der Lichtquelle 5 vorgesehen.

Jedes Bedien- oder Sichtelement 1, der in den Figuren 1 gezeigten Anordnung 10, weist einen ein Reflexionshologramm beinhaltenden, holografischen Bildträger 8 auf, der angrenzend an die untere Grenzfläche G' des Lichtleiters 4 angeordnet ist. Das in den Lichtleiter 4 eingekoppelte, von der Lichtquelle 5 erzeugte Wiedergabewellenfeld L gelangt von der Lichteintrittsfläche S, welche aus Sicht des Betrachters B seitlich bezüglich des ersten holografischen Bildträgers 8 angeordnet ist, aufgrund einer durch Totalreflexionen im Lichtleiter 4 bewirkten Lichtausbreitung unter anderem an der oberen Grenzfläche G in den an die untere Grenzfläche G' angrenzend angeordneten, holografischen Bildträger 8, wird dort bevorzugt durch Phasen- und/oder Amplitudeninterferenz aus dem Wiedergabewellenfeld L in ein das erste Transmissionshologram als Bildinformation beinhaltendes Bildwellenfeld L' transformiert, welches aus dem holografischen Bildträger 8 in Richtung des Bedieners B ausgekoppelt wird, um dem Bediener B das im holografischen Bildträger gespeicherte Transmissionshologramm als virtuelles Bild unter anderem in Form des in Figur 1 gezeigten Zeichens 6 bzw. weiteren Zeichens 6' anzuzeigen. Dabei handelt es sich jeweils um ein Symbol oder mindestens ein Schriftzeichen oder einen aus mehreren Schriftzeichen gebildeten Schriftzug, die beispielsweise jeweils eine dem jeweiligen Bedien- oder Sichtelement 1 zugeordnete Schaltfunktionalität und/oder einen aktuellen Schaltzustand visuell anzeigen sollen. Der holografische Bildträger 8 ist beispielsweise als Folienschichtaufbau ausgebildet und weist neben der das erste Transmissionshologramm beinhaltenden Filmschicht, die hier eine Fotopolymerschicht ist, eine nicht näher dargestellte Klebstoffschicht sowie eine Substratschicht 9 auf, die beispielsweise eine Thermoplastfolie, wie eine PC-, PET oder TAC-Folie ist. Beispielsweise liegt die Dicke der Fotopolymerschicht im Bereich von 1 µm bis 70 µm. Die holgrafische Bildinformation ist beispielsweise durch Prägen in diese eingebracht. Der holografische Bildträger 8 und der Lichtleiter 4 sind beispielsweise über die Klebstoffschicht stoffschlüssig verbunden. Gemäß einer alternativen Ausführungsform wird die stoffschlüssige Verbindung zwischen dem ersten holografischen Bildträger 8 und dem Lichtleiter 4 durch Hinterspritzen des holografischen Bildträgers 8 mit einem den Lichtleiter 4 ausbildenden, transparenten Thermoplast in einem thermisch formgebenden Verfahrensschritt bewirkt. Eine symbolisch in Figur 2 angedeutete Maximalabmessung D des holografischen Bildträgers beträgt weniger als 30 mm, bevorzugt weniger als 20 mm.

Wie Figur 2 zeigt, erstreckt sich die durch das eine Zeichen 6 definierte Darstellungsfläche 16, die hier eben ist und auch als Darstellungsebene bezeichnet wird, nicht parallel zur oberen Grenzfläche B und nicht parallel zur unteren Grenzfläche G' des Lichtleiters 4. Die Darstellungsfläche 16 wird beispielsweise durch die Verlaufsrichtung eines Schriftzuges sowie dessen Schriftgröße aufgespannt. Hier weist eine Orthogonale durch den geometrischen Mittelpunkt der durch das eine Zeichen 6 aufgespannten Darstellungsfläche 16 in Richtung des Bedieners B, während dessen Blick schräg, also in einem Winkel β von weniger 90°, auf die beiden Grenzflächen G und G' fällt.

Hier ist die erste Darstellungsfläche 16 so gewählt, dass diese aus Sicht des Bedieners B bzw. Betrachters über der Eingabe- oder Sichtfläche 3 zu liegen scheint. Neben der das wenigstens eine Zeichen 6 beinhaltenden, ersten Darstellungsfläche 16 ist ferner eine zweite Darstellungsfläche 16' vorgesehen. Diese weist ein weiteres Zeichen 6' auf, das die primäre Aufgabe hat, dem holgrafischen Bild des Bildträgers 8 aus Sicht des Bedieners B eine optische Tiefe zu verleihen. Beispielsweise beinhaltet das in der zweiten Darstellungsfläche 16' liegende weitere Zeichen 6' eine Negativ-Darstellung des jeweils in der ersten Darstellungsfläche 16 liegenden Zeichens 6.

Wie aus der Figur 2 zu erkennen, ist die zweite Darstellungsfläche 16' ebenfalls nicht parallel zur oberen Grenzfläche G und nicht parallel zur unteren Grenzfläche G', darüber hinaus auch nicht parallel zur ersten Darstellungsfläche 16. Somit unterscheiden sich die erste Darstellungsfläche 16 und die zweite Darstellungsfläche 16' bezüglich ihres zugehörigen Neigungswinkels α', die deren Orthogonale mit einer Orthogonalen auf die obere Grenzfläche G einschließt.

Durch die erfindungsgemäße Lösung lässt sich somit nicht nur bauraumsparend ein Bedien- oder Sichtelement 1 mit zugehöriger Funktionsanzeige realisieren, welche durch Aktivieren einer Lichtquelle 5 selektiv zumindest ein Zeichen 6 bzw. 6' zur Anzeige bringt, sondern auch eine auf die Bedien- und/oder Einbausituation abgestimmte Ausrichtung des Zeichens 6 erreichen, welche nicht mit der Ausrichtung des Lichtleiters 4 bzw. seiner Grenzflächen G, G' übereinstimmt. Dadurch dass somit die holografische Darstellung perspektivisch betrachtet eine Aufsicht auf das Zeichen 6 oder das weitere Zeichen 6' aus einer Betrachtungsposition ermöglicht, die nicht der Aufsicht auf die Grenzflächen G, G' des Lichtleiters 4 und damit meist auch nicht der Aufsicht auf die Eingabe- oder Sichtfläche 3 entspricht, sind nicht nur vielfältige Einbausituationen möglich, ohne die Erkennbarkeit oder Lesbarkeit des Zeichens 6 bzw. des Z weiteren Zeichens 6' zu beeinträchtigen, sondern das Bedien- oder Sichtelement 1 lässt sich leicht und lediglich durch Wechsel des holografischen Bildträgers 4 an diverse Einbau- bzw. Bediensituationen anpassen. Es wird zudem eine bessere Sichtbarkeit/Ablesbarkeit für die "Zielperson" des Zeichens, hier den seitlichen Betrachter B erreicht, da die Mittelachse M des Sichtbarkeitskegels K in Richtung der Position des seitlichen Betrachters also damit bezogen auf die obere Grenzfläche G und untere Grenzfläche G' geneigt ist, möglichst genau auf die Position des seitlichen Betrachters B ausgerichtet ist. Der Sichtbarkeitskegel K ist derjenige Raumwinkelbereich innerhalb dessen ein seitlicher Betrachter B das Zeichen 6, insbesondere dessen Außenumfang vollständig zu erkennen vermag. Wie dargestellt, ist der Sichtbarkeitskegel K derjenige Raumwinkelbereich zwischen den geometrischen Randstrahlen R, die vom äußeren Rand des holografischen Bildträgers 8 ausgehen und das in der jeweiligen Darstellungsfläche 16 angezeigte Zeichen 6 tangential einfassen. Dem Fachmann ist klar, dass der Sichtbarkeitskegel nicht zwingend kegelförmig, sondern sein Querschnitt durch die Form des dargestellten Zeichens 6 bestimmt ist. Ein geneigter Sicherheitskegel K ergibt sich beispielsweise durch die geneigte Ausrichtung der Mittelachse M dieses Raumwinkelbereichs, wobei diese Mittelachse M dem geometrischen Strahlengang durch den geometrischen Mittelpunkt des in der jeweiligen Darstellungsfläche 16 liegenden Zeichens 6 entspricht. Geeigneter Weise schließt die Mittelachse M mit der oberen Grenzfläche G und/oder der unteren Grenzfläche G' des Lichtleiters 4 einen Winkel γ von weniger als 30° ein. Zur besseren Erkennbarkeit des Zeichens 6 ist ferner vorgesehen, dass die Mittelachse M des Sichtbarkeitskegels K die zugehörige Darstellungsfläche 16 orthogonal schneidet.

Durch die erfindungsgemäße Lösung kann so leicht ein Bedien- oder Sichtelement 1 von einer Fahrerbediensituation mit spezifischem Betrachtungswinkel auf den Lichtleiter 4 bzw. die Eingabe- oder Sichtfläche auf eine Beifahrerbediensituation durch alleinigen Wechsel des holografischen Bildträgers 4 umgestellt werden. Beispielsweise kann ein Bedien- oder Sichtelement 1, welches für die Einbausituation in einem Rechtslenker-Fahrzeug vorgesehen ist, durch alleinigen Wechsel des holografischen Bildträgers 4 in eine für den Einbau in einem Linkslenker-Fahrzeug bestimmte Ausgestaltung umgestellt werden. Durch die "optische Separierung" von Lichtleiter 4 und Eingabe- oder Sichtfläche 3 ist zudem sichergestellt, dass das optische System zur Erzeugung des virtuellen Bilds nicht durch Schmutz und oder haptische Elemente auf der Eingabe- oder Sichtfläche 3 beeinträchtigt wird. Dabei ist die komplette Bildinformation in den holografischen Bildträger 4 integrierbar, und bleibt auch bei Fremdlichteinfall durch die transparente Eingabe- oder Sichtfläche 3 für den Bediener zuverlässig unsichtbar, so dass Fehlinformationen weitgehend vermieden werden können.

## Patentansprüche

1. Bedien- oder Sichtelement (1), aufweisend: ein eine zumindest bereichsweise transluzente oder zumindest bereichsweise transparente Eingabe- oder Sichtfläche (3) ausbildendes Eingabe- oder Sichtteil (2); einen Träger (12) zur Festlegung des Bedien- oder Sichtelements (1) an einer externen Struktur, insbesondere einer Kraftfahrzeugkomponente; eine optionale Detektionseinrichtung (13), die ausgebildet ist, eine Betätigung und/oder eine Berührung der Eingabe- oder Sichtfläche (3) durch einen Bediener (B) zu detektieren; einen aus Sicht des Bedieners (B) unterhalb der Eingabe- oder Sichtfläche (3) angeordneten, am Träger (12) festgelegten, transparenten Lichtleiter (4), der eine der Eingabe- oder Sichtfläche (3) zugewandte, obere Grenzfläche (G) und eine der Eingabe- oder Sichtfläche (3) abgewandte untere Grenzfläche (G') aufweist; mindestens eine Lichtquelle (5) die angeordnet ist, ein optisches Wiedergabewellenfeld (L) über eine Lichteintrittsfläche (S) in den Lichtleiter (4) einzukoppeln; einen, ein Hologramm beinhaltenden, holografischen Bildträger (8), der angrenzend an die obere Grenzfläche (G) des Lichtleiters (4) oder angrenzend an die untere Grenzfläche (G') des Lichtleiters (4) angeordnet ist, wobei das in den Lichtleiter (4) eingekoppelte Wiedergabewellenfeld (L) von der Lichteintrittsfläche (S) aufgrund einer durch innere Reflexion im Lichtleiter (4) bewirkten Lichtausbreitung zur oberen Grenzfläche (G) gelangt, in Richtung des Bedieners (B) ausgekoppelt wird und dabei zu dem holografischen Bildträger (8) gelangt, wobei von dem ersten holografischen Bildträger (8) das Wiedergabewellenfeld (L) in ein Bildwellenfeld (L') transformiert wird und das Bildwellenfeld (L') aus dem holografischen Bildträger (8) zum Bediener (B) gelangt, um dem Bediener (B) das im holografischen Bildträger (8) gespeicherte Hologramm als virtuelles Bild anzuzeigen, welches zur Visualisierung der dem Bedien- oder Sichtelement (1) zugeordneten Schaltfunktionalität und/oder eines akuten Schaltzustands des Bedien- oder Sichtelements (1) ein Zeichen (6), wie mindestens Symbol und/oder mindestens ein Schriftzeichen, beinhaltet, das in einer ersten Darstellungsfläche (16) liegt; **dadurch gekennzeichnet, dass** sich die erste Darstellungsfläche (16) nicht parallel zur oberen Grenzfläche (G) und nicht parallel zur unteren Grenzfläche (G') erstreckt.

2. Bedien- oder Sichtelement (1) gemäß dem vorhergehenden Anspruch, wobei eine Mittelachse (M) eines Sichtbarkeitskegels (K) geneigt zur oberen Grenzfläche (G) und zur unteren Grenzfläche (G') des Lichtleiters (4) ist.

3. Bedien- oder Sichtelement (1) gemäß dem vorhergehenden Anspruch, wobei die Mittelachse (M) einen Winkel von weniger als 30° mit der oberen Grenzfläche (G) und/oder unteren Grenzfläche einschließt.

4. Bedien- oder Sichtelement (1) gemäß einem der vorhergehenden Ansprüche, wobei zumindest im Bereich unterhalb der Eingabe- oder Sichtfläche (3) ein Luftspalt (15) zwischen dem Lichtleiter (4) und dem Eingabe- oder Sichtteil (2) vorgesehen ist.

5. Bedien- oder Sichtelement (1) gemäß einem der vorhergehenden Ansprüche, wobei das Eingabe- oder Sichtteil (2) unter Einwirkung einer Betätigungskraft auf die Eingabe- oder Sichtfläche (3) in Richtung des holografischen Bildträgers (8) elastisch verformbar ausgestaltet ist oder gegenüber dem Träger (12) in Richtung des Lichtleiters (4) elastisch rückstellend verlagerbar gelagert ist, um eine detektierbare Betätigung der Eingabe- oder Sichtfläche (3) zu ermöglichen.

6. Bedien- oder Sichtelement (1) gemäß einem der vorhergehenden Ansprüche, wobei ein optisches Element (7) zur Erzeugung eines kollimierten Wiedergabewellenfeldes vorgesehen ist, das bevorzugt zwischen der Lichteintrittsfläche (S) des Lichtleiters (4) und der Lichtquelle (5) angeordnet ist.

7. Bedien- oder Sichtelement (1) gemäß einem der vorhergehenden Ansprüche, wobei der holografische Bildträger (8) einen Folienschichtaufbau aufweist.

8. Bedien- oder Sichtelement (1) gemäß einem der vorhergehenden Ansprüche, wobei der holografische Bildträger (8) und der Lichtleiter (4) stoffschlüssig verbunden sind.

9. Bedien- oder Sichtelement (1) gemäß einem der vorhergehenden Ansprüche, wobei die erste Darstellungsfläche (16) aus Sicht des Bedieners über der oberen Grenzfläche (G), bevorzugt über der Eingabe- oder Sichtfläche (3), liegt.

10. Bedien- oder Sichtelement (1) gemäß einem der vorhergehenden Ansprüche, wobei das im holografischen Bildträger (8) gespeicherte Hologramm mindestens ein in einer zweiten Darstellungsfläche (16') liegendes weiteres Zeichen (6'), wie mindestens ein weiteres Symbol oder mindestens ein weiteres Schriftzeichen, beinhaltet, wobei die zweite Darstellungsfläche (16') sich ebenfalls nicht parallel zur oberen Grenzfläche (G) und nicht parallel zur unteren Grenzfläche (G') erstreckt, sich bevorzugt nicht parallel zur ersten Darstellungsfläche (16) erstreckt.

11. Bedien- oder Sichtelement (1) gemäß dem vorhergehenden Anspruch, wobei das in der zweiten Darstellungsfläche (16') liegende, weitere Zeichen (6') eine Negativ-Darstellung des jeweils in der ersten Darstellungsfläche (16) liegenden Zeichens (6) aufweist.

12. Bedien- oder Sichtelement (1) gemäß einem der beiden vorhergehenden Ansprüche, wobei die zweite Darstellungsfläche (16') aus Sicht des Bedieners unter der Eingabe- oder Sichtfläche (3), bevorzugt unter der unteren Grenzfläche (G') liegt.

13. Bedien- oder Sichtelement (1) gemäß einem der vorhergehenden Ansprüche, wobei die erste Darstellungsfläche (16) und die obere Grenzfläche (G) und die untere Grenzfläche (G') eben sind und die erste Darstellungsfläche (16) geneigt zur oberen Grenzfläche (G) und geneigt zur unteren Grenzfläche (G') ist.

14. Bedien- oder Sichtelement (1) gemäß einem der vorhergehenden Ansprüche, wobei das Hologramm des holografischen Bildträgers (8) ein Transmissionshologramm ist und der holografische Bildträger (8) angrenzend an die obere Grenzfläche (G) angeordnet ist.

15. Bedien- oder Sichtelement (1) gemäß einem der vorhergehenden Ansprüche 1 bis 7, wobei das Hologramm des holografischen Bildträgers (8) ein Reflexionshologramm ist und der holografische Bildträger (8) angrenzend an die untere Grenzfläche (G') angeordnet ist.

16. Bedien- oder Sichtelement (1) gemäß einem der vorhergehenden Ansprüche, wobei der Lichtleiter (4) im Wesentlichen flächig ausgebildet ist, wobei die obere Grenzfläche (G) und die untere Grenzfläche (G') jeweils eine Hauptfläche ausbilden und eine die Hauptflächen verbindende Stirnfläche die Lichteintrittsfläche (S) des Lichtleiters (4) ausbildet.

17. Bedien- oder Sichtelement (1) gemäß einem der vorhergehenden Ansprüche, wobei eine Hauptausbreitungsrichtung (H) der Lichtquelle (5) geneigt zur oberen Grenzfläche (G) ausgerichtet ist.

18. Bedien- oder Sichtelement (1) gemäß einem der vorhergehenden Ansprüche, wobei der Lichtleiter (4) so ausgebildet, dass die Lichteintrittsfläche (S) vom Bediener (B) aus gesehen bezüglich des holografischen Bildträgers (8) seitlich und/oder nach hinten versetzt angeordnet ist.

19. Bedien- oder Sichtelement (1) gemäß einem der vorhergehenden Ansprüche, wobei das Eingabe- oder Sichtteil (2) mit dem Träger (12) und/oder dem Lichtleiter (4) stoffschlüssig verbunden ist.

20. Bedien- oder Sichtelement (1) gemäß einem der vorhergehenden Ansprüche, wobei eine transparente Elektrode (13) oder ein transparentes Elektrodenarray an dem Eingabe- oder Sichtteil (2) im Bereich der Eingabe- oder Sichtfläche (3) festgelegt ist, und das Bedien- oder Sichtelement (1) eine mit der Elektrode (13) oder den Elektroden des Elektrodenarray elektrisch leitend verbundene Auswerteinheit zur kapazitiven, bevorzugt ortsaufgelösten, Berührdetektion aufweist.

21. Bedien- oder Sichtelement (1) gemäß einem der vorhergehenden Ansprüche, wobei die Eingabe- oder Sichtfläche (2) eine Vertiefung oder Erhebung (14) zur haptischen Orientierung aufweist.

22. Anordnung (10) aus mehreren Bedien- oder Sichtelementen (1) gemäß einem der vorhergehenden Ansprüche.

23. Verwendung des Bedien- oder Sichtelements (1) nach einem der vorhergehenden Ansprüche 1 bis 21 in einem Kraftfahrzeug.

## Claims

1. Operator control or visual element (1), having: an input or visual part (2) forming an input or visual area (3) which is translucent at least in regions or transparent at least in regions; a carrier (12) for fixing the operator control or visual element (1) to an external structure, in particular a motor vehicle component; an optional detection device (13) which is designed to detect operation and/or touching of the input or visual area (3) by an operator (B); a transparent light guide (4) which is arranged below the input or visual area (3) from the point of view of the operator (B) and is fixed to the carrier (12) and which has an upper interface (G) facing the input or visual area (3) and a lower interface (G') facing away from the input or visual area (3); at least one light source (5) which is arranged to couple an optical reproduction wave field (L) into the light guide (4) via a light entry surface (S); a holographic image carrier (8) which contains a hologram and is arranged adjoining the upper interface (G) of the light guide (4) or adjoining the lower interface (G') of the light guide (4), wherein the reproduction wave field (L) coupled into the light guide (4) passes from the light entry surface (S) to the upper interface (G) on account of light propagation caused by internal reflection in the light guide (4), is coupled out in the direction of the operator (B) and in the process passes to the holographic image carrier (8), wherein the reproduction wave field (L) is transformed into an image wave field (L') by the first holographic image carrier (8) and the image wave field (L') passes from the holographic image carrier (8) to the operator (B) in order to display the hologram stored in the holographic image carrier (8) as a virtual image to the operator (B), which virtual image, for visualizing the switching functionality assigned to the operator control or visual element (1) and/or an acute switching state of the operator control or visual element (1), contains a sign (6), such as at least one symbol and/or at least one character, which lies in a first display area (16); **characterized in that** the first display area (16) does not extend parallel to the upper interface (G) and does not extend parallel to the lower interface (G').

2. Operator control or visual element (1) according to the preceding claim, wherein a central axis (M) of a visibility cone (K) is inclined with respect to the upper interface (G) and with respect to the lower interface (G') of the light guide (4).

3. Operator control or visual element (1) according to the preceding claim, wherein the central axis (M) encloses an angle of less than 30° with the upper interface (G) and/or lower interface.

4. Operator control or visual element (1) according to any of the preceding claims, wherein an air gap (15) is provided between the light guide (4) and the input or visual part (2) at least in the region below the input or visual area (3).

5. Operator control or visual element (1) according to any of the preceding claims, wherein the input or visual part (2) is designed to be elastically deformable in the direction of the holographic image carrier (8) under the action of an operating force on the input or visual area (3) or is mounted such that it can be displaced in an elastically returning manner in the direction of the light guide (4) with respect to the carrier (12), in order to enable detectable operation of the input or visual area (3).

6. Operator control or visual element (1) according to any of the preceding claims, wherein an optical element (7) is provided for generating a collimated reproduction wave field, the optical element preferably being arranged between the light entry surface (S) of the light guide (4) and the light source (5).

7. Operator control or visual element (1) according to any of the preceding claims, wherein the holographic image carrier (8) has a film layer construction.

8. Operator control or visual element (1) according to any of the preceding claims, wherein the holographic image carrier (8) and the light guide (4) are connected in an integrally joined manner.

9. Operator control or visual element (1) according to any of the preceding claims, wherein the first display area (16) lies above the upper interface (G), preferably above the input or visual area (3), from the point of view of the operator.

10. Operator control or visual element (1) according to any of the preceding claims, wherein the hologram stored in the holographic image carrier (8) contains at least one further sign (6') situated in a second display area (16'), such as at least one further symbol or at least one further character, wherein the second display area (16') likewise does not extend parallel to the upper interface (G) and not parallel to the lower interface (G'), preferably does not extend parallel to the first display area (16).

11. Operator control or visual element (1) according to the preceding claim, wherein the further sign (6') situated in the second display area (16') has a negative representation of the sign (6) respectively situated in the first display area (16).

12. Operator control or visual element (1) according to either of the two preceding claims, wherein the second display area (16') lies below the input or visual area (3), preferably below the lower interface (G'), from the point of view of the operator.

13. Operator control or visual element (1) according to any of the preceding claims, wherein the first display area (16) and the upper interface (G) and the lower interface (G') are planar and the first display area (16) is inclined with respect to the upper interface (G) and inclined with respect to the lower interface (G').

14. Operator control or visual element (1) according to any of the preceding claims, wherein the hologram of the holographic image carrier (8) is a transmission hologram and the holographic image carrier (8) is arranged adjoining the upper interface (G).

15. Operator control or visual element (1) according to any of the preceding Claims 1 to 7, wherein the hologram of the holographic image carrier (8) is a reflection hologram and the holographic image carrier (8) is arranged adjoining the lower interface (G').

16. Operator control or visual element (1) according to any of the preceding claims, wherein the light guide (4) is of substantially planar design, wherein the upper interface (G) and the lower interface (G') each form a main face and an end face connecting the main faces forms the light entry surface (S) of the light guide (4).

17. Operator control or visual element (1) according to any of the preceding claims, wherein a main propagation direction (H) of the light source (5) is oriented in an inclined manner with respect to the upper interface (G).

18. Operator control or visual element (1) according to any of the preceding claims, wherein the light guide (4) is designed in such a way that the light entry surface (S) is arranged offset laterally and/or to the rear with respect to the holographic image carrier (8) as seen by the operator (B).

19. Operator control or visual element (1) according to any of the preceding claims, wherein the input or visual part (2) is connected in an integrally joined manner to the carrier (12) and/or the light guide (4).

20. Operator control or visual element (1) according to any of the preceding claims, wherein a transparent electrode (13) or a transparent electrode array is fixed to the input or visual part (2) in the region of the input or visual area (3), and the operator control or visual element (1) has an evaluation unit, which is electrically conductively connected to the electrode (13) or the electrodes of the electrode array, for capacitive, preferably spatially resolved, touch detection.

21. Operator control or visual element (1) according to any of the preceding claims, wherein the input or visual area (2) has a recess or raised portion (14) for haptic orientation.

22. Arrangement (10) comprising a plurality of operator control or visual elements (1) according to any of the preceding claims.

23. Use of the operator control or visual element (1) according to any of the preceding Claims 1 to 21 in a motor vehicle.

## Revendications

1. Élément de manœuvre ou de visualisation (1), comportant : une partie d'entrée ou partie de visualisation (2) formant une surface d'entrée ou surface de visualisation (3) au moins partiellement translucide ou au moins partiellement transparente ; un support (12) servant à fixer l'élément de manœuvre ou de visualisation (1) à une structure externe, en particulier un composant de véhicule automobile ; un dispositif de détection (13) optionnel, qui est conçu pour détecter un actionnement et/ou un contact de la surface d'entrée ou surface de visualisation (3) par un opérateur (B) ; un guide de lumière transparent (4) qui, vu par l'opérateur (B), est disposé au-dessous de la surface d'entrée ou surface de visualisation (3) et fixé au support (12), et qui présente une surface (G) de frontière supérieure faisant face à la surface d'entrée ou surface de visualisation (3) et une surface (G') de frontière inférieure orientée à l'opposé de la surface d'entrée ou surface de visualisation (3) ; au moins une source lumineuse (5) qui est disposée pour coupler un champ (L) d'ondes de reproduction optique dans le guide de lumière (4) via une surface (S) d'entrée de lumière ; un support (8) d'image holographique, comprenant un hologramme, qui est disposé de façon adjacente à la surface (G) de frontière supérieure du guide de lumière (4) ou adjacente à la surface (G') de frontière inférieure du guide de lumière (4), le champ (L) d'ondes de reproduction couplé dans le guide de lumière (4) progressant de la surface (S) d'entrée de lumière à la surface (G) de frontière supérieure du fait d'une propagation de la lumière engendrée via une réflexion interne dans le guide de lumière (4), étant couplé vers l'extérieur dans la direction de l'opérateur (B) et progressant jusqu'au support (8) d'image holographique, le champ (L) d'ondes de reproduction étant transformé en un champ (L') d'ondes d'image par le premier support (8) d'image holographique et le champ (L') d'ondes d'image progressant du support (8) d'image holographique à l'opérateur (B), afin de présenter à l'opérateur (B) l'hologramme conservé dans le support (8) d'image holographique sous la forme d'une image virtuelle, qui contient un symbole (6), tel qu'au moins un symbole et/ou au moins un caractère, dans une première surface (16) d'affichage servant à visualiser la fonctionnalité de commutation associée à l'élément (1) de manœuvre ou de visualisation et/ou un état actuel de commutation de l'élément (1) de manœuvre ou de visualisation ; **caractérisé en ce que** la première surface (16) d'affichage s'étend de façon non parallèle à la surface (G) de frontière supérieure et non parallèle à la surface (G') de frontière inférieure.

2. Élément de manœuvre ou de visualisation (1) selon la revendication précédente, dans lequel un axe central (M) d'un cône de visibilité (K) est incliné par rapport à la surface (G) de frontière supérieure et à la surface (G') de frontière inférieure du guide de lumière (4).

3. Élément de manœuvre ou de visualisation (1) selon la revendication précédente, dans lequel l'axe central (M) forme un angle de moins de 30° avec la surface (G) de frontière supérieure et/ou la surface de frontière inférieure.

4. Élément de manœuvre ou de visualisation (1) selon l'une des revendications précédentes, dans lequel, au moins dans la zone située sous la surface d'entrée ou surface de visualisation (3), un interstice d'air (15) est prévu entre le guide de lumière (4) et la partie d'entrée ou partie de visualisation (2).

5. Élément de manœuvre ou de visualisation (1) selon l'une des revendications précédentes, dans lequel la partie d'entrée ou partie de visualisation (2) est conçue de façon à être déformable élastiquement en direction du support d'image holographique (8) sous l'effet d'une force d'actionnement appliquée à la surface d'entrée ou surface de visualisation (3), ou est montée de façon à pouvoir être déplacée élastiquement vers le guide de lumière (4) par rapport au support (12), afin de permettre un actionnement détectable de la surface d'entrée ou surface de visualisation (3).

6. Élément de manœuvre ou de visualisation (1) selon l'une des revendications précédentes, dans lequel il est prévu un élément optique (7) pour la génération d'un champ d'ondes de reproduction collimaté, qui est de préférence disposé entre la surface (S) d'entrée de lumière du guide de lumière (4) et la source lumineuse (5).

7. Élément de manœuvre ou de visualisation (1) selon l'une des revendications précédentes, dans lequel le support d'image holographique (8) présente une structure de couche de film.

8. Élément de manœuvre ou de visualisation (1) selon l'une des revendications précédentes, dans lequel le support d'image holographique (8) et le guide de lumière (4) sont liés par complémentarité de matériau.

9. Élément de manœuvre ou de visualisation (1) selon l'une des revendications précédentes, dans lequel la première surface d'affichage (16), du point de vue de l'opérateur, se situe au-dessus de la surface (G) de frontière supérieure, de préférence au-dessus de la surface d'entrée ou surface de visualisation (3).

10. Élément de manœuvre ou de visualisation (1) selon l'une des revendications précédentes, dans lequel l'hologramme stocké dans le support (8) d'image holographique contient au moins un autre symbole (6') situé dans une deuxième surface d'affichage (16'), tel qu'au moins un autre symbole ou au moins un autre caractère, la deuxième surface d'affichage (16') s'étendant également non parallèlement à la surface (G) de frontière supérieure et non parallèlement à la surface (G') de frontière inférieure, et s'étendant de préférence non parallèlement à la première surface d'affichage (16).

11. Élément de manœuvre ou de visualisation (1) selon la revendication précédente, dans lequel l'autre symbole (6') situé dans la deuxième surface d'affichage (16') présente une représentation négative du symbole (6) respectif situé dans la première surface d'affichage (16).

12. Élément de manœuvre ou de visualisation (1) selon l'une des deux revendications précédentes, dans lequel la deuxième surface d'affichage (16'), du point de vue de l'opérateur, se situe sous la surface d'entrée ou surface de visualisation (3), de préférence sous la surface (G') de frontière inférieure.

13. Élément de manœuvre ou de visualisation (1) selon l'une des revendications précédentes, dans lequel la première surface d'affichage (16), la surface (G) de frontière supérieure et la surface (G') de frontière inférieure sont planes, et la première surface d'affichage (16) est inclinée par rapport à la surface (G) de frontière supérieure et inclinée par rapport à la surface (G') de frontière inférieure.

14. Élément de manœuvre ou de visualisation (1) selon l'une des revendications précédentes, dans lequel l'hologramme du support (8) d'image holographique est un hologramme de transmission et le support (8) d'image holographique est disposé de façon adjacente à la surface (G) de frontière supérieure.

15. Élément de manœuvre ou de visualisation (1) selon l'une des revendications 1 à 7, dans lequel l'hologramme du support (8) d'image holographique est un hologramme de réflexion et le support (8) d'image holographique est disposé de façon adjacente à la surface (G') de frontière inférieure.

16. Élément de manœuvre ou de visualisation (1) selon l'une des revendications précédentes, dans lequel le guide de lumière (4) est de forme sensiblement plane, la surface (G) de frontière supérieure et la surface (G') de frontière inférieure formant respectivement une surface principale, et une face frontale reliant les surfaces principales formant la surface (S) d'entrée de lumière du guide de lumière (4).

17. Élément de manœuvre ou de visualisation (1) selon l'une des revendications précédentes, dans lequel une direction de propagation principale (H) de la source lumineuse (5) est orientée de façon inclinée par rapport à la surface (G) de frontière supérieure.

18. Élément de manœuvre ou de visualisation (1) selon l'une des revendications précédentes, dans lequel le guide de lumière (4) est conçu de telle sorte que la surface (S) d'entrée de lumière, vue par l'opérateur (B), est disposée de façon décalée latéralement et/ou vers l'arrière par rapport au support (8) d'image holographique.

19. Élément de manœuvre ou de visualisation (1) selon l'une des revendications précédentes, dans lequel la partie d'entrée ou partie de visualisation (2) est liée par complémentarité de matériau au support (12) et/ou au guide de lumière (4).

20. Élément de manœuvre ou de visualisation (1) selon l'une des revendications précédentes, dans lequel une électrode transparente (13) ou un réseau d'électrodes transparentes est fixé à la partie d'entrée ou partie de visualisation (2) dans la zone de la surface d'entrée ou surface de visualisation (3), et l'élément de manœuvre ou de visualisation (1) comporte une unité d'évaluation connectée électriquement de façon conductrice à l'électrode (13) ou aux électrodes du réseau d'électrodes pour une détection tactile capacitive, de préférence de façon spatialement résolue.

21. Élément de manœuvre ou de visualisation (1) selon l'une des revendications précédentes, dans lequel la surface d'entrée ou surface de visualisation (2) présente un renfoncement ou un relief (14) pour l'orientation haptique.

22. Ensemble (10) de plusieurs éléments de manœuvre ou de visualisation (1) selon l'une des revendications précédentes.

23. Utilisation de l'élément de manœuvre ou de visualisation (1) selon l'une des revendications 1 à 21 dans un véhicule automobile.
